# EUROPÄISCHE PATENTSCHRIFT

(11) **EP 1 036 104 B1**
(45) Veröffentlichungstag und Bekanntmachung des Hinweises auf die Patenterteilung: **23.10.2002**
(21) Anmeldenummer: 98958912.2
(22) Anmeldetag: 21.11.1998
(51) Int. Cl.: C08G 18/24, C08G 18/48

(54) **VERFAHREN ZUR HERSTELLUNG VON ZELLIGEN KUNSTSTOFFEN**
METHOD FOR PRODUCING CELLULAR PLASTICS
PROCEDE DE PRODUCTION DE MATIERES PLASTIQUES

(30) Priorität: 04.12.1997 DE 19753723
(43) Veröffentlichungstag der Anmeldung: 20.09.2000
(73) Patentinhaber: Bayer Aktiengesellschaft, 51368 Leverkusen (DE)
(72) Erfinder: HAAS, Peter, D-42781 Haan (DE); BRECHT, Klaus, D-51399 Burscheid (DE); RUCKES, Andreas, D-40764 Langenfeld (DE)
(86) Internationale Anmeldenummer: EP9807498
(87) Internationale Veröffentlichungsnummer: WO99029751

(56) Entgegenhaltungen:
- WO-A-96/27625
- FR-A- 2 352 009
- US-A- 4 043 949

## Beschreibung

Die Erfindung betrifft die Herstellung von Formkunststoffen auf Polyurethanbasis aus Polyetherpolyolen und Isocyanatprepolymeren unter Verwendung von Wasser als Treibmittel unter Anwendung einer speziellen Katalyse mit verbesserter Gasausbeute und verbessertem Reaktionsverhalten.

Die Herstellung von gegebenenfalls zellförmigen Formkunststoffen auf PUR-Basis mit einer kompakten Oberfläche gehört seit langem zum Stand der Technik, wie US-A 40 65 410, US-A 42 18 543, 37 26 952, 13 65 215, 40 33 912, 40 24 090, 40 58 492, 40 98 731, 44 77 602, EP-A 17 928, 44 481, DE-A 31 33 859.

Diese Formkunststoffe werden seit Jahren auch zur Herstellung von Schuhsohlen verwendet. Bei Verzicht auf die Verwendung von bestimmten halogenhaltigen Treibmitteln wie Monofluortrichlormethan (R 11) bzw. die Folgeprodukte R 141b und R 134a und dem Treiben mit Wasser resultieren technische Probleme, die bis heute nicht vollständig gelöst sind.

Bei der Verwendung von Wasser ergeben sich nämlich folgende Schwierigkeiten: Formverweilzeit mit dem Hintergrund der Dimensionsstabilität durch die Neigung zum Blähen oder Wachsen, da die Formteile bei früher üblichen Zeiten noch nicht belastbar sind; dies läßt sich durch längere Formverweilzeiten kompensieren, hierdurch sinkt jedoch die Produktivität.

Eine weitere Größe ist das eingeengte Verdichtungsverhältnis, d.h. der Quotient aus Formteil- und Freischaumrohdichte. Während früher Verdichtungsgrade bis 2,8 verarbeitet wurden, liegt das Verhältnis für Wasser erfahrungsgemäß zwischen 1,7 und 2,1. Bei höheren Werten ergibt sich ein Blähen, bei niedrigeren Werten ergeben sich Probleme mit der Formteilfüllung.

Es wurde nun gefunden, daß mit bestimmten Metallkatalysatoren eine hohe Gasausbeute mit Wasser als Treibmittel erreicht werden kann und frühzeitig gute mechanische Eigenschaften vorliegen.

Gegenstand der Erfindung ist ein Verfahren zur Herstellung von zelligen Formkunststoffen einer Rohdichte von 150 bis 1000 kg/m³ auf Polyetherpolyurethanbasis durch Formverschäumung eines Reaktionsgemischs aus
A) mindestens einer höhermolekularen Polyether- und/oder Polyesterpolyol-Komponente,
B) einer Isocyanat-Komponente,
C) Kettenverlängerern,
D) Treibmitteln,
E) Amin- und Metallaktivatoren und
F) weiteren bekannten Hilfs- und Zusatzmitteln
unter Einhaltung einer Kennzahl von 70 bis 130, dadurch gekennzeichnet, daß als Treibkomponente D) Wasser gegebenenfalls unter Zusatz organischer Treibmittel verwendet wird und die Aktivatorkomponente E) eine Zinnverbindung der Formel (I) 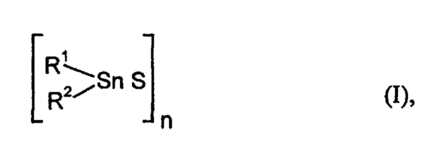 in welcher
- R¹, R²: gleiche oder verschiedene C₁- bis C₁₀-Alkylreste, oder C₆- bis C₁₀-Arylreste oder Aralkylreste
- n: eine Zahl von 1 bis 4, vorzugsweise 1, 2, 3 oder 4 bedeutet,
enthält,
verwendet wird.

Die höhermolekularen Polyetherpolyolkomponente A) hat eine mittlere OH-Funktionalität von 1,95 bis 2,95 und stellt bevorzugt ein Gemisch dar aus
Aa) mindestens einem Polyetherpolyol des OH-Zahlbereichs 21 bis 112, welches durch Alkoxylierung eines bifunktionellen Starters z.B. mit Propylenoxid sowie Ethylenoxid mit überwiegend primären OH-Gruppen
   und
Ab) mindestens einem Polyetherpolyol des OH-Zahlbereichs 20 bis 56 und einer Starterfunktionalität 2,5 bis 3,5, welches durch Alkoxylierung entsprechender Starter oder Startergemische z.B. mit Propylenoxid und Ethylenoxid mit überwiegend primären OH-Endgruppen.

Diese Polyole können übliche Füllstoffe enthalten, wie sie durch Pfropfung mit Styrol/Acrylnitril oder in Form von Polyharnstoffdispersionen durch Addition von Diaminen und Diisocyanaten in Polyolen erhalten werden.

Die Polyisocyanat-Komponente B) ist ein Prepolymer mit einem NCO-Gehalt von 10 bis 25 Gew.-%. Sie wird hergestellt durch Umsetzung von i) Diisocyanatodiphenylmethan mit ii) einer Polyolkomponente des OH-Zahlbereichs 20 bis 112 und einer mittleren OH-Funktionalität von 2,0 bis 2,5, wobei die Komponente i) CarbodiimidGruppen enthalten kann.

Als Komponente C) werden Glykole wie 1,2-Ethandiol und 1,4-Butandiol usw. verwendet.

Als Aktivatoren D) kommen auf der Aminseite Triethylendiamin, N-Methylimidazol, N,N-Dimethylbenzylamin, die auch teilneutralisiert sein können sowie die ebenfalls bekannten Sn(II)- oder Sn(IV)-Carboxylate oder Mercaptide in Betracht.

Als weitere gegebenenfalls mitzuverwendende Hilfs- und Zusatzmittel F) seien oberflächenaktive Substanzen, Schaumstabilisatoren, Zellregler, innere Trennmittel, Farbstoffe, Pigmente, Hydrolyseschutzmittel, fungistatisch und bakteriostatisch wirkende Substanzen, Lichtschutz- und Oxidationsschutzmittel oder Antistatika beispielhaft genannt.

Zur Durchführung des erfindungsgemäßen Verfahrens werden die Ausgangsmaterialien in solchen Mengen eingesetzt, die einer Isocyanat-Kennzahl von 70 bis 130, insbesondere 90 bis 110 entsprechen. Unter "Isocyanat-Kennzahl" versteht man hierbei den Quotienten aus Anzahl der Isocyanatgruppen und Anzahl der gegenüber Isocyanaten reaktiven Gruppen, multipliziert mit 100.

Zur Durchführung des erfindungsgemäßen Verfahrens wird in Analogie zu den bekannten Verfahren des Standes der Technik gearbeitet. Dies bedeutet im allgemeinen, daß die Komponenten A) und C) bis F) zu einer "Polyolkomponente" vereinigt werden und einstufig mit der Polyisocyanatkomponente B) in einer geschlossenen Form, beispielsweise einer geschlossenen Metall- oder Kunststofform miteinander zur Reaktion gebracht werden, wobei man sich der üblichen Zweikomponenten-Mischaggregate bedient. Die Menge des in die Form eingebrachten Reaktionsgemisches und auch die Menge des als Treibmittel verwendeten Wassers innerhalb der oben angegebenen Grenzen werden dabei so bemessen, daß Formschaumstoffe einer Rohdichte von 150 bis 1000 kg/m³ resultieren. Die erfindungsgemäßen Verfahrensprodukte stellen halbharte Schaumstoffe mit kompakter Oberfläche dar, d.h. ihre Härte Shore A gemäß DIN 53 505 liegt im Bereich von 15 bis 75.

Ihr wichtigstes Verwendungsgebiet liegt in der Schuhherstellung, beispielsweise für geschäumte Schuhsohlen oder Schuheinbauteile.

### Beispiele

In den folgenden Beispielen wurde unter Beachtung einer Isocyanatkennzahl von 100 gearbeitet. Die mechanischen Eigenschaften wurden an Prüfkörpern der Abmessung 20 x 20 x 1 cm bestimmt. Alle Prozentangaben beziehen sich auf Gewichtsprozente.

### Ausgangsmaterialien

A) Polyetherpolyole
   A1) Polyetherpolyol der OH-Zahl 28 mit 70 % Propylenoxid und 30 % Ethylenoxid und überwiegend primären OH-Gruppen und Propylenglykol als Starter
   A2) Polyetherpolyol der OH-Zahl 25 mit 80 % Propylenoxid und 20 % Ethylenoxid und überwiegend primären OH-Gruppen mit Trimethylolpropan als Starter
   A3) Polyetherpolyol der OH-Zahl 56 aus Propylenoxid mit Propylenglykol als Starter
   A4) Polyetherpolyol der OH-Zahl 56 aus Propylenoxid mit Trimethylolpropan als Starter
B) Polyisocyanat
   B1) Prepolymer, hergestellt durch Umsetzung von 56 Gew.-Teilen 4,4'-Diisocyanatodiphenylmethan (MDI) und 2 Gew.-Teilen modifiziertem MDI mit einem NCO-Gehalt von 30 %, hergestellt durch teilweise Carbodiimidisierung und einem Polyolgemisch aus 37 Gew.-Teilen Polyol A3) und 5 Gew.-Teilen Polyol A4), wobei ein NCO-Gehalt von 17,5 % erhalten wird.
C) Erfindungsgemäßer Katalysator Dibutylzinnsulfid

Zu einer Lösung aus 24 g Na2S 9H₂O und 200 ml Wasser sowie 5 ml Ethanol werden 12,45 g Dibutylzinnoxid gegeben und anschließend 12 g Essigsäure zugetropft. Man rührt eine Stunde bei Raumtemperatur, setzt 100 ml Methylenchlorid zu, schüttelt aus und trennt. Nach Einengen erhält man 9,8 g Dibutylzinnsulfid. Analyse: S gef.: 12,5; ber.: 12,3 %, Molmasse 795 g/Mol (osmometrisch); n = 3; Molmasse monomer 264 g;

**Tabelle 1**

| Komponente/Beispiel | 1 | 2 | 3 | 4 | 5 | 6 | 7 | 8 | 9 |
|---|---|---|---|---|---|---|---|---|---|
| Polyol A1 | 76,5 | | | | | | | > | |
| Polyol A2 | 10 | | | | | | | > | |
| 1,4-Butandiol | 12 | | | | | | | > | |
| 1,2-Ethandiol | 1 | | | | | | | > | |
| Triethylendiamin | 0,3 | | | | | | | > | |
| Stabi. DC 190 (Fa. Air Produkts) | 0,2 | | | | | | | > | |
| Wasser | 0,35 | 0,3 | 0,35 | 0,35 | 0,3 | 0,35 | 0,35 | 0,35 | 0,40 |
| Dibutylzinnsulfid (erfindungsgemäß) | 0,03 | 0,03 | - | - | - | 0,06 | 0,09 | - | - |
| Dibutylzinnmercaptid | 0,02 | 0,02 | 0,02 | 0,04 | 0,04 | 0,02 | 0,02 | 0,08 | 0,02 |
| Prep. B1 | 90 | 88 | 90 | 90 | 88 | 90 | 90 | 90 | 92 |
| Rohdichte(frei) (kg/m³) | 284 | 304 | 340 | 340 | 360 | 268 | 260 | 340 | 283 |
| Rohdichte(Form) (kg/m³) | 550 | | | | | | | > | > |
| Verd.-Verh. | 1,93 | 1,8 | 1,62 | 1,62 | 1,52 | 2,05 | 2,1 | 1,62 | 1,94 |
| Shore A | 52 | 52 | 50 | 51 | 52 | 51 | 50 | 50 | 49 |
| Entformung nach 3 min | - | - | - | - | - | + | + | - | - |
| 4 min | + | + | - | - | - | + | + | - | - |
| 5 min | + | + | - | - | + | + | + | + | - |
| 6 min | + | + | + | + | + | + | + | + | + |
| ohne Plattenbruch (+) mit Plattenbruch (-) | | | | | | | | | |
| Startzeit s | 19 | 18 | 19 | 16 | 17 | 18 | 18 | 15 | 19 |
| Abbindezeit s | 37 | 32 | 37 | 36 | 32 | 35 | 35 | 30 | 38 |
| Steigzeit s | 50 | 50 | 50 | 48 | 50 | 50 | 50 | 50 | 55 |
| Zupfzeit s* | 75 | 70 | 90 | 90 | 78 | 65 | 63 | 75 | 98 |

| | | | | | | | | | |
|---|---|---|---|---|---|---|---|---|---|
| * Zeit bis zum Vorliegen einer für das fertige Elastomer üblichen Bruchdehnung von mindestens 300 %. | | | | | | | | | |

Der erfindungsgemäße Katalysator Dibutylzinnsulfid ergibt eine außergewöhnlich hohe Gasausbeute, wobei auch bei größeren Konzentrationen die Startzeit praktisch unverändert bleibt. Der bevorzugte Ablauf der Treibreaktion ermöglicht sogar noch ein Absenken der Wassermenge, ohne daß die Freischaumrohdichte im Vergleich zur Katalyse ohne Dibutylzinnsulfid stark ansteigt. Hierdurch kann auf ein für Wasser - getriebene Sohlensysteme ideales Verdichtungsverhältnis von ca. 2,0 eingestellt werden. Als Folge lassen sich nun auch Probleme wie Dimensionsstabilität oder Formfüllverhalten beherrschen. Der Polymeraufbau ist bei unbeeinflußter Startzeit frühzeitig beendet, so daß insgesamt kürzere Entformungszeiten ermöglicht werden, ohne daß die für die Formulierung kritische Startzeit reduziert wird. Dies ist bei den bisher üblichen Aktivatoren immer zu beobachten. So zeigen die Beispiele 2, 6 und 7 trotz Anheben der Menge an Dibutylzinnsulfid eine konstante Startzeit, also ein Latentverhalten der erfindungsgemäßen Aktivierung.

Die Eignung der erfindungsgemäßen Katalyse geht weiter aus nachstehenden Tabellen 2 und 3 hervor.

Ziel einer sicherer Produktion z.B. von Schuhsohlen soll ein Toleranzbereich für eine Schwindung (Verkürzung) der Sohle am besten von 0, maximal 0,5 % sein, da die Werkzeuge auf diesen Wert eingestellt sind. Bei Verwendung von Wasser als Treibmittel tritt ab einer gewissen Wassermenge (ca. 0,35 Teile) ein gegenteiliger Effekt, nämlich ein Formteilwachstum (Blähen) auf. Diese Verzögerung führt oft zu einer Nichtverwendbarkeit der Sohle, da das Wachstum in Längs- und Querrichtung unterschiedlich ist.

**Tabelle 2**

| Schwindung ein angestrebter Toleranzbereich von 0 bis max. 0,5 %. | | | | | | | | | |
|---|---|---|---|---|---|---|---|---|---|
| Beispiel | 1 | 2 | 3 | 4 | 5 | 6 | 7 | 8 | 9 |
| nach 3 Minuten | nein | nein | nein | nein | nein | ja | ja | nein | nein |
| nach 4 Minuten | ja | ja | nein | nein | nein | ja | ja | nein | nein |

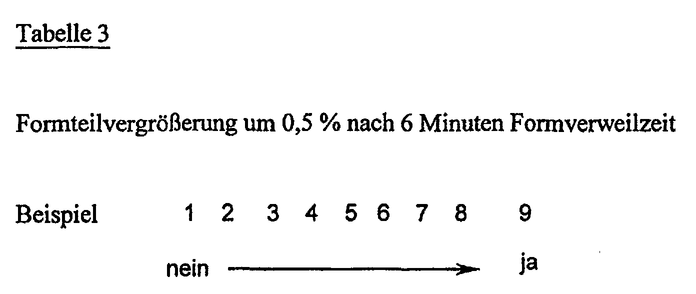

Die Beispiele 6 und 7 zeigen besonders die außergewöhnlich gute Gesamtausbeute und sind zudem nach 3 Minuten dimensionsstabil entformbar, wobei die Schwindung bereits dem Idealverhalten entspricht.

Eine konventionelle Katalyse wie in Beispiel 9 zeigt nach 6 Minuten Formstandzeit noch ein Formteilwachstum (Blähen) der Sohle.

## Patentansprüche

1. Verfahren zur Herstellung von zelligen Formkunststoffen eines Rohdichte von 150 bis 1000 kg/m³ auf Polyetherpolyurethanbasis durch Formverschäumung eines Reaktionsgemischs aus
A) mindestens einer höhermolekularen Polyether- und/oder Polyesterpolyol-Komponente,
B) einer Isocyanat-Komponente,
C) Kettenverlängerern,
D) Treibmitteln,
E) Amin- und Metallaktivatoren und
F) weiteren bekannten Hilfs- und Zusatzmitteln,
**dadurch gekennzeichnet, daß** als Treibkomponente D) Wasser gegebenenfalls unter Zusatz organischer Treibmittel verwendet wird und die Aktivatorkomponente E) eine Zinnverbindung der Formel (I) 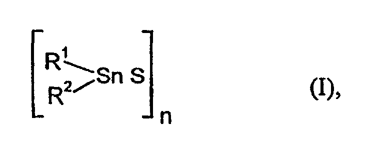 in welcher
R¹, R² gleiche oder verschiedene C₁- bis C₁₀-Alkylreste, C₆- bis C₁₀-Arylreste oder Aralkylreste
n eine Zahl von 1 bis 4 bedeutet,
enthält,
wobei die Ausgangsmaterialien unter Einhaltung eines NCO-Index von 70 bis 130 zur Reaktion gebracht werden.

2. Verfahren nach Anspruch 1, **dadurch gekennzeichnet, daß** als Treibmittel D) Wasser oder Wasser und organische Treibmittel verwendet werden und die Aktivatorkomponente E) Verbindungen der Formel 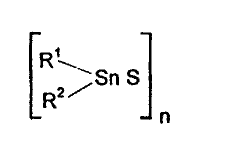 in welcher
R¹ und R² gleiche oder verschiedene C₁-C₆-Alkylreste und
n eine Zahl von 1 bis 4 bedeutet,
enthält.

## Claims

1. A method of producing polyether polyurethane-based cellular plastics mouldings with an apparent density of 150 to 1000 kg/m³ by the *in situ* foaming of a reaction mixture of
A) at least one high molecular weight polyether polyol and/or polyester polyol component,
B) an isocyanate component,
C) chain extenders,
D) foaming agents,
E) amine- and metal activators, and
F) other known adjuvants and additives,
**characterised in that** water, optionally with the addition of organic foaming agents, is used as foaming component D), and activator component E) contains a tin compound of formula (I) 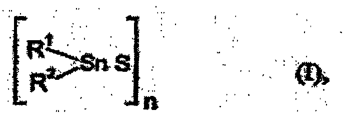 in which
R¹ and R² denote identical or different C₁ to C₁₀ alkyl radicals, C₆ to C₁₀ aryl radicals, or aralkyl radicals, and
n denotes a number from 1 to 4,
wherein the starting materials are reacted whilst maintaining an NCO index of 70 to 130.

2. A method according to claim 1, **characterised in that** water or water and organic foaming agents are used as foaming agent D), and activator component E) contains compounds of formula 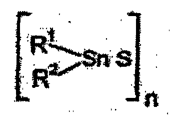 in which
R¹ and R² denote identical or different C₁-C₆ alkyl radicals, and
n denotes a number from 1 to 4.

## Revendications

1. Procédé de fabrication de matières plastiques moulées cellulaires d'une masse volumique apparente de 150 à 1000 kg/m³ à base de polyétherpolyuréthane par expansion dans le moule d'un mélange réactionnel constitué par :
A) au moins un composant polyéther- et/ou polyesterpolyol de masse moléculaire relativement élevée,
B) un composant isocyanate,
C) des agents d'allongement de chaîne,
D) des agents porogènes,
E) des activateurs de types amine et métalliques, et
F) d'autres adjuvants et additifs connus
en respectant un paramètre de 70 à 130, **caractérisé en ce que** l'on utilise comme composant porogène D) l'eau éventuellement avec addition d'agents porogènes organiques, et le composant activateur E) contient un composé de l'étain de formule (I) 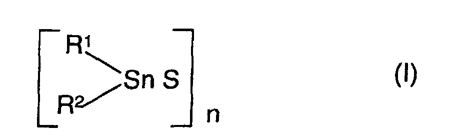 où
R¹, R² sont des restes alkyle en C₁ à C₁₀ identiques ou différents, ou des restes aryle en C₆ à C₁₀ ou des restes aralkyle,
n représente un nombre de 1 à 4, de préférence de 1, 2, 3 ou 4,
où les produits de départ sont mis à réagir en respectant un indice NCO de 70 à 130.

2. Procédé selon la revendication 1, **caractérisé en ce que** l'on utilise comme agent porogène D) l'eau ou l'eau et des agents porogènes organiques, et le composant activateur E) contient des composés de formule 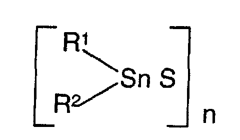 où
R₁ et R₂ sont des restes alkyles en C₁-C₆ identiques ou différents et
n représente un nombre de 1 à 4.
